# EUROPÄISCHE PATENTANMELDUNG

(11) **EP 0 527 306 A1**
(43) Veröffentlichungstag der Anmeldung: **17.02.1993**
(21) Anmeldenummer: 92109883.6
(22) Anmeldetag: 12.06.1992
(51) Int. Cl.: F28D 17/02, F28D 20/00

(54) **Regenerator**

(30) Priorität: 13.08.1991 DE 4126646
(71) Anmelder: DIDIER-WERKE AG, D-65189 Wiesbaden (DE)
(72) Erfinder: Taut, Ulrich, W-7000 Stuttgart 31 (DE); Streuber, Christian, Dr., W-6200 Wiesbaden (DE); Kalfa, Horst, Dr., W-6270 Idstein (DE)
(74) Vertreter: Brückner, Raimund, Dipl.-Ing.

(57) **Zusammenfassung**

Ein Regenerator, beispielsweise bei einem Winderhitzer oder einem Wärmespeicher in einer Solaranlage, weist zur Speicherung sensibler Warme einen Speicherkern (1) aus keramischem oder metallischen oder natürlichem Material auf. Der Speicherkern (1) wird zum Laden von der heißen Seite her mit einem heißen Ladestrom beaufschlagt, bis an der anderen, kalten Seite eine maximal zulässige Austrittstemperatur erreicht ist. Zum Entladen wird der Speicherkern (1) von der kalten Seite her mit einem kalten Entladestrom beaufschlagt, bis auf der heißen Seite eine minimal zulässige Entladestrom-Austrittstemperatur erreicht ist. Um die Wärmeaufnahmekapazität für sensible Wärme ohne Volumenvergrößerung zu verbessern, ist an der heißen Seite und/oder der kalten Seite des Speicherkerns (1) eine Schicht (3, 4) als Temperaturpuffer angeordnet, die das Erreichen dar maximal zulässigen Austrittstemperaturen überproportional verzögert, oder die Wärmeaufnahmekapazität überproportional erhöht.

## Beschreibung

Die Erfindung betrifft einen Regenerator, beispielsweise bei einem Winderhitzer oder einem Wärmespeicher in einer Solaranlage, mit einem z.B. aus keramischem Material aufgebauten Speicherkern zur Speicherung sensibler Wärme, wobei der Speicherkern zum Laden von der einen, "heißen" Seite her mit einem heißen Ladestrom beaufschlagt wird, bis an der anderen, "kalten" Seite eine maximal zulässige Ladestrom-Austrittstemperatur erreicht ist, und der Speicherkern zum Entladen von der anderen, "kalten" Seite her mit einem kalten Entladestrom beaufschlagt wird, bis an der "heißen" Seite eine minimal zulässige Entlade-Austrittstemperatur erreicht ist.

Bei solchen Regeneratoren ist der Ladestrom und der Entladestrom in der Regel ein Luft- bzw. Gasstrom. Die maximal zulässige Ladestrom-Austrittstemperatur liegt beispielsweise unter 400°C. Die minimal zulässige Entladestrom-Austrittstemperatur liegt beispielsweise über 600°C, um an einem nachgeschalteten Aggregat ausgenutzt werden zu können.

In der Fachzeitschrift, Stahl u. Eisen 95 (1975) Nr. 17, Seiten 802 bis 806 sind verschiedene Winderhitzertypen und der Aufbau ihrer Speicherkerne beschrieben. Die Speicherkerne sind aus Steinen unterschiedlicher keramischer Materialien aufgebaut, um eine Anpassung in die in unterschiedlichen Höhenlagen unterschiedlichen Temperaturen zu erreichen.

In der DE 37 25 450 A1 ist eine Winderhitzeranlage mit drei einem Hochofen zugeordneten Winderhitzern beschrieben. Diese arbeiten wechselweise im Ladebetrieb und im Entladebetrieb.

In der DE-PS 971 943 sind besondere Luftkanalformen von Besatzsteinen des Speicherkerns eines Winderhitzers angegeben. Diese dienen der Verbesserung der Wärmeübertragung.

In der DE-PS 847 179 ist eine besondere Anordnung von Mehrlochbesatzsteinen für Winderhitzer beschrieben, bei der alle Durchgangslöcher der Lagen der Besatzsteine miteinander verbunden sind.

In der DE-PS 960 489 ist ein Regenerator beschrieben, bei dem die Wärmeaufnahmefähigkeit des Speicherkerns vergrößert sein soll. Hierfür sind besondere Gestaltungen der Besatzsteine in übereinanderliegenden Zonen vorgeschlagen.

Das Forschungsprojekt "PHOEBUS" befaßt sich mit einer Solaranlage, bei der über Spiegel ein Empfänger beheizt wird. Dessen Wärmeenergie wird über Luft als Wärmeträger in einem Regenerator der eingangs genannten Art gespeichert und treibt über einen Dampfgenerator eine Dampfturbine zur Stromerzeugung. Der Speicherkern soll tags geladen und nachts entladen werden.

Aufgabe der Erfindung ist es, bei einem Regenerator der eingangs genannten Art die Wärmeaufnahmekapazität zu verbessern, ohne dessen Volumen zu vergrößern, oder bei gleicher Wärmeaufnahmekapazität das Volumen und damit die Baugröße des Regenerators zu verringern.

Erfindungsgemäß ist obige Aufgabe bei einem Regenerator der eingangs genannten Art dadurch gelöst, daß an der heißen Seite und/oder an der kalten Seite des Speicherkerns als Temperaturpuffer eine Schicht angeordnet ist, die das Erreichen der maximal zulässigen Ladestrom-Austrittstemperatur und/oder der minimal zulässigen Entladestrom-Austrittstemperatur überproportional verzögert, oder die Wärmeaufnahmekapazität überproportional erhöht.

Der Einbau dieser temperaturpuffernden Schichten hat überraschenderweise zur Folge, daß nicht nur die Schichten geänderten Materials eine höhere Wärmeaufnahmekapazität aufweisen, sondern daß insbesondere das unveränderte Material zwischen den geänderten Materialien in der Wärmeaufnahmekapazität erheblich zunimmt, damit also die gesamte Aufnahmekapazität überproportional ansteigt.

Diese temperaturpuffernden Schichten können folgende geänderten Eigenschaften besitzen:
- Eine erhöhte Wärmekapazität durch eine höhere Dichte und/oder höhere spezifische Wärmekapazität.
- Eine erhöhte Wärmekapazität durch Einsatz eines Latentmaterials (z.B. Salzkeramik) durch Ausnutzung der Phasenumwandung durch z.B. die Schmelzenthalpie des Salzes.
- Eine erhöhte Wärmekapazität durch Einsatz eines Materials, welches eine chemische Reaktion durchläuft.
- Eine Veränderung geometrischer Kenndaten, z.B. Erhöhung der spezifischen Oberfläche.

Für unterschiedliche Anwendungen sind verschiedene Lösungsansätze oder Kombinationen zu bevorzugen.

In bevorzugter Ausgestaltung der Erfindung besteht die Schicht aus einem Latentwärme-Speichermaterial. Insbesondere wird dabei die Schmelzenthalpie ausgenutzt. Die Latentwärme der Schicht führt zwar auch zu einer Erhöhung der Wärmekapazität des Regenerators, ohne dessen Bauvolumen zu vergrößern. Es hat sich jedoch gezeigt, daß dieser Effekt weniger ausschlaggebend ist als die Tatsache, daß das Latentwärme-Speichermaterial als Temperaturpuffer wirkt, so daß der aus üblichem Material bestehende - kein Latentwärme-Speichermaterial enthaltende - Speicherkern mehr sensible Wärme speichern kann, als im üblichen Fall, in dem kein Temperaturpuffer vorgesehen ist.

Durch den Einsatz von relativ wenig geändertem (höherwertigem) Material (z.B. Salzkeramik, veränderte Struktur, ...) wird die genannte Wärmeaufnahmekapazität des Regenerators überproportional verbessert. Das kann bedeuten, daß nach heutigen Berechnungen bei gleichem Bauvolumen der Preis für die Anlage geringer steigt als die Wärmeaufnahmekapazität.

Vorzugsweise sind die als Temperaturpuffer wirkenden Schichten sowohl an der heißen Seite als auch an der kalten Seite vorgesehen. Bei schon bestehenden Regeneratoren kann es jedoch schwierig sein, eine der als Temperaturpuffer wirkenden Schichten anzuordnen. Auch durch den Einbau nur einer Schicht wird schon eine Erhöhung der Wärmeaufnahmekapazität erreicht.

Weitere vorteilhafte Ausgestaltungen der Erfindung ergeben sich aus den Unteransprüchen und der folgenden Beschreibung.

In der Zeichnung zeigen:
- Figur 1: einen Winderhitzer schematisch im Schnitt,
- Figur 2: einen Regenerator als Wärmespeicher für eine Solaranlage,
- Figur 3: einen Salz-Keramikstein für den Aufbau der temperaturpufferenden Schicht,
- Figur 4: Verlauf der Gasein- und Austrittstemperaturen über der Zeit bei der Ladung und Entladung eines Wärmespeichers für eine Solaranlage,
- Figur 5: Verlauf der Austrittstemperatur über der Entladezeit bei einem Speicher für sensible Wärme (Stand der Technik) und einem erfindungsgemäß verbessertem Speicher mit zwei Schichten Latentmaterial,
- Figur 6: zeitliche Temperaturverläufe beim Laden eines Regenerators für eine Solaranlage über dessen Höhe nach dem Stand der Technik,
- Figur 7: zeitliche Temperaturverläufe nach Figur 6 bei der erfindungsgemäßen Verbesserung, und
- Figur 8: gespeicherte Wärme über der Speicherhöhe für die beiden Fälle der Figuren 6 und 7.

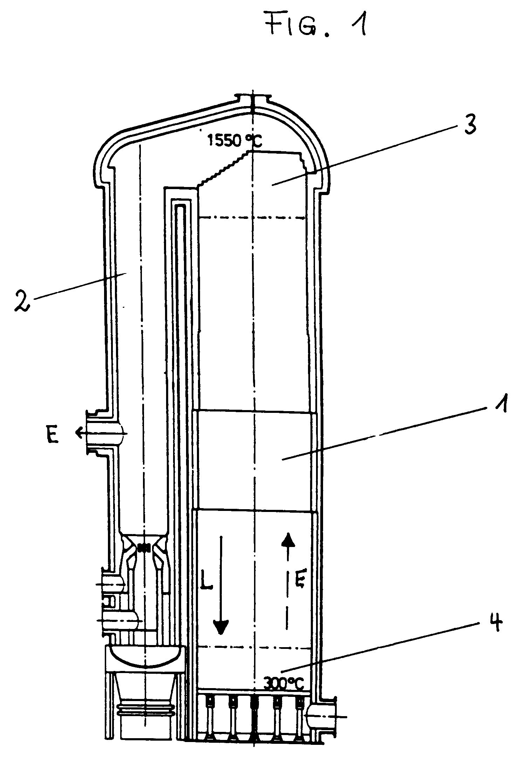

Ein Winderhitzer nach Figur 1 weist einen Speicherkern 1 und einen außenstehenden Brennschacht 2 auf. An der oberen, heißen Seite des Speicherkerns 1 ist eine Schicht 3 aufgebaut. An der unteren, kalten Seite des Speicherkerns 1 ist eine Schicht 4 vorgesehen. Eine der Schichten 3, 4 kann entfallen. Der Speicherkern 1 und die Schichten 3, 4 bilden den Regenerator.

Der Speicherkern 1 ist aus Steinen aus keramischem Material aufgebaut. In üblicher Weise können die Steine in den unterschiedlichen Höhenlagen des Speicherkerns 1 aus unterschiedlichen keramischen Materialien bestehen, um eine Anpassung an die in den verschiedenen Höhenlagen unterschiedlichen thermischen und mechanischen Belastungen zu erreichen.

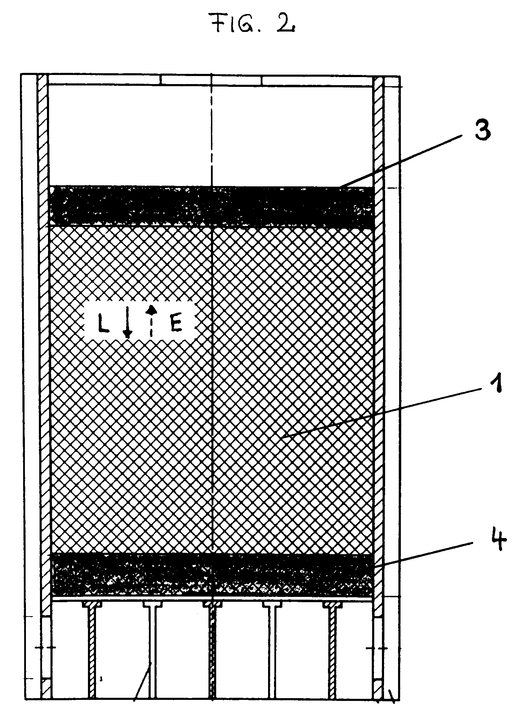

Der Regenerator nach Figur 2 ist ähnlich aufgebaut, wie der nach Figur 1. Er ist als Speicher für eine Solaranlage vorgesehen.

Solche Regeneratoren haben eine Höhe in der Größenordnung zwischen 20 m bis 40 m, wobei z.B. oben Temperaturen etwa über 600°C bis 1550°C und z.B. unten Temperaturen unter 400°C herrschen.

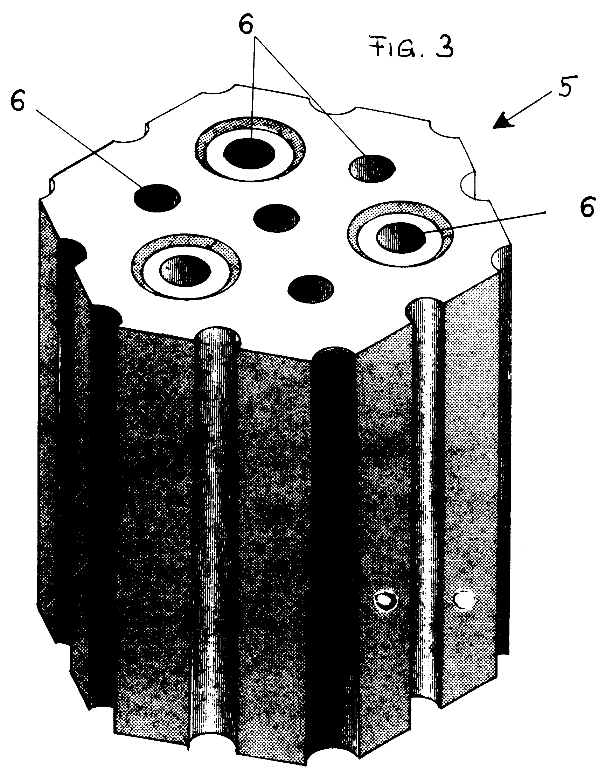

Die obere Schicht 3 und die untere Schicht 4 sind beispielsweise aus mehreren Lagen von Steinen aufgebaut. In Figur 3 ist einer dieser Steine gezeigt. Der Stein 5 weist mehrere Durchgangslöcher 6 für den Ladeluftstrom L und den Entladeluftstrom E auf. Das keramische Material des Steines 5 bildet im Gegensatz zu den Steinen des Speicherkerns 1 eine mikroporöse Struktur, in die als Latentwärme-Speichermaterial Salze eingelagert sind. Insgesamt besteht der Stein 5 somit aus einem Salz/Keramikmaterial. Als keramisches Material eignet sich beispielsweise MgO. Diesem sind etwa 30 Vol.-% bis 60 Vol.-%, insbesondere 45 Vol.-%, Salze beigemengt. Als Salze können beispielsweise Carbonate, Sulfate, Fluoride verwendet werden.

Da im Bereich der oberen Schicht 3 und der unteren Schicht 4 sowohl im Entladebetrieb als auch im Ladebetrieb erheblich unterschiedliche Temperaturen herrschen, muß für die Steine 5 der oberen Schicht 3 und der unteren Schicht 4 ein unterschiedliches Salz gewählt werden, um die Schmelzenthalpie ausnutzen zu können.

Für die obere Schicht 3 wird ein Salz mit einer Schmelztemperatur gewählt, die zwischen der Temperatur des Ladestroms L und der minimal zulässigen Austrittstemperatur des Entladestroms E liegt, um beim Laden ein Aufschmelzen des Salzes und beim Entladen ein Erstarren des Salzes zu erreichen. Entsprechend wird für die untere Schicht 4 ein Salz verwendet, dessen Schmelztemperatur zwischen der Entladetemperatur und der beim Laden maximal zulässigen Austrittstemperatur des Ladeluftstroms liegt.

Die Dicke bzw. Höhe der Schichten 3, 4 und die Bemessung ihrer Durchgangslöcher 6 wird so gewählt, daß die Salze auf die jeweilige Schmelz- bzw. Erstarrungstemperatur kommen. Vergleichsweise enge Durchgangslöcher 6 können den Wärmeübergang auf die Salze verbessern.

Die Tiefen- bzw. Höhen der Schichten 3, 4 liegen zusammen bei etwa 10 bis 35 % der Höhe des Speicherkerns 1. Bei einer Gesamthöhe des Speicherkerns 1 mit den Schichten 3, 4 von 20m hat sich gezeigt, daß für die obere Schicht 3 und die untere Schicht 4 jeweils eine Höhe von 2m geeignet ist. Im Prinzip ist angestrebt, die obere Schicht 3 und die untere Schicht 4 möglichst kleinzuhalten, da die für sie verwendeten Steine wesentlich teuerer sind, als die Steine, aus denen der Speicherkern 1 besteht. Im übrigen führt eine größere Dicke der Schichten 3, 4 nur begrenzt zu einer Verbesserung, da die Dicke der Schichten 3, 4 nur so groß sein sollte, daß die in ihnen enthaltenen Salze bei den Temperaturwechseln schmelzen und erstarren.

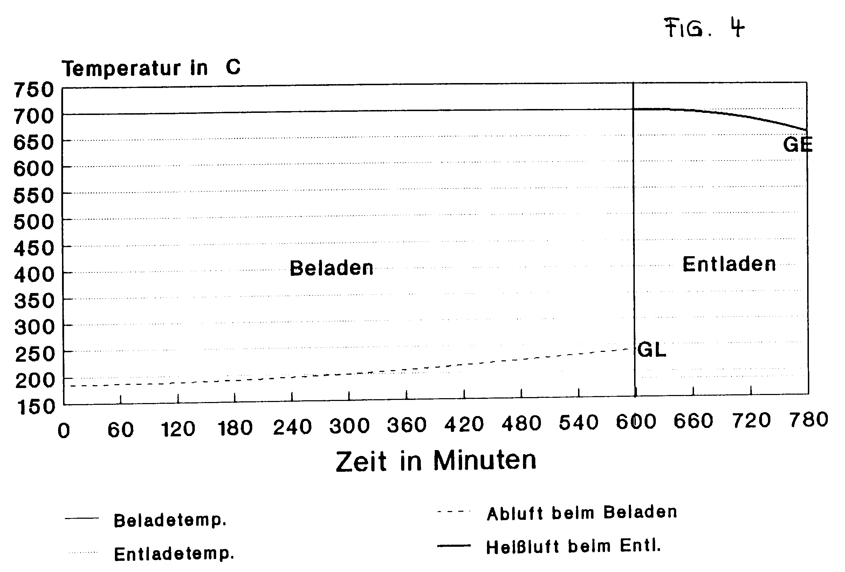

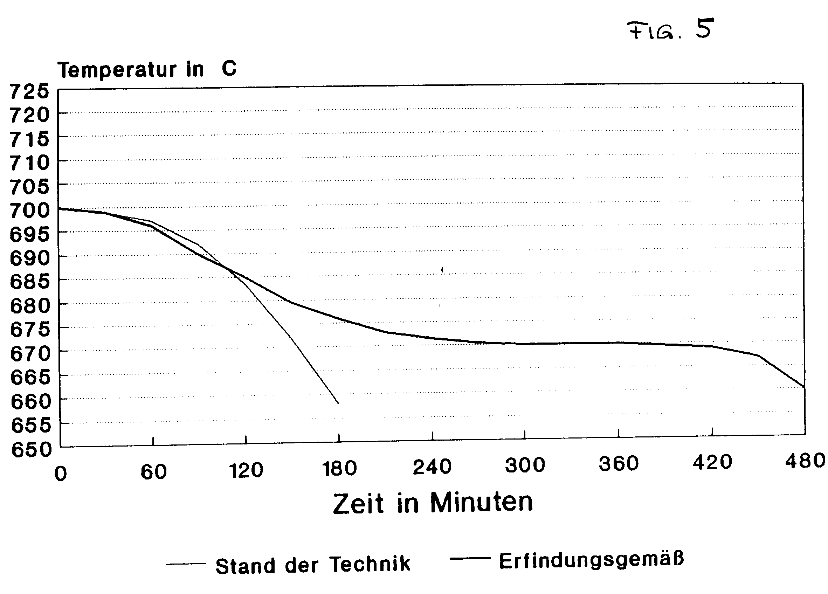

Figur 4 zeigt in durchgezogenen Linien über der Zeit Temperaturverläufe des den Regenerator während der Ladezeitdauer oben und unten durchströmenden Ladeluftstroms L und strichliert des den Regenerator während der Entladezeitdauer unten und oben durchströmenden Entladeluftstroms E ohne die Erfindung. Die durch die Verwendung der oberen Schicht 3 und der unteren Schicht 4 erreichte Verbesserung ist hinsichtlich des Entladeluftstroms E in Figur 5 eingetragen.

Für den Fall des Ladens ist eine maximal zulässige Ladestrom-Austrittstemperatur GL als Grenztemperatur am unteren Ende des Regenerators vorgesehen, die nicht überschritten werden soll, damit die dort vorgesehenen Bauteile nicht geschädigt werden. Diese Grenz-Austrittstemperatur GL liegt bei dem Diagramm nach Figur 4 bei etwa 250°C.

Für den Fall des Entladens besteht eine minimal zulässige Entladestrom-Austrittstemperatur GE als Grenztemperatur. Diese muß ausreichend hoch sein, um einem dem Regenerator nachgeschalteten Aggregat, beispielsweise Hochofen oder Dampfturbine, den Ladestrom mit einer hinreichend hohen Temperatur zu liefern. Im Fall des Winderhitzers nach Figur 1 ist dies die für die dem Winderhitzer nachgeschalteten Hochofen notwendige Minimaltemperatur. Im Fall des Regenerators nach Figur 2 ist dies die für den Betrieb eines einer Dampfturbine vorgeschalteten Wärmetauschers nötige Minimaltemperatur. Nach Figur 4 liegt diese Grenztemperatur GE bei etwa 650°C. Im jeweiligen Anwendungsfall können die Grenztemperaturen GL, GE höher oder niedriger liegen. Gleiches gilt für die im folgenden beschriebenen Temperatur-Zeitverhältnisse der Figur 4.

Nach Figur 4 steht oben am Regenerator ein Ladeluftstrom L mit 700°C. Der unten austretende Ladeluftstrom steigt dabei von etwa 185°C an. Erreicht der unten austretende Ladeluftstrom die Grenz-Austrittstemperatur GL, dann wird durch eine Regeleinrichtung der Ladestrom L abgeschaltet. Es kann dann die Entladung einsetzen.

Bei der Entladung wird ein Entladeluftstrom E mit einer Temperatur von etwa 185°C in die untere Seite des Regenerators eingeleitet. Dieser führt dazu, daß die Temperatur an der oberen Seite des Regenerators von etwa 700°C allmählich abnimmt. Der Entladeluftstrom E verläßt den Regenerator anfänglich mit etwa 700°C und kühlt ab. Hat er die Grenztemperatur GE erreicht, dann wird die Entladung beendet.

In der Figur 5 ist strichliert die Entladung des Speichers wie in Figur 4, der nur sensible Wärme speichert, von 700°C auf die Grenztemperatur GE von 650°C dargestellt. Mit durchgezogener Linie ist vergleichsweise die Entladung für einen erfindungsgemäßen Speicher dargestellt. Ersichtlich führen die Schichten 3, 4 zu einem Halteeffekt hinsichtlich der Temperatur, so daß die Grenztemperatur GE erst wesentlich später erreicht wird.

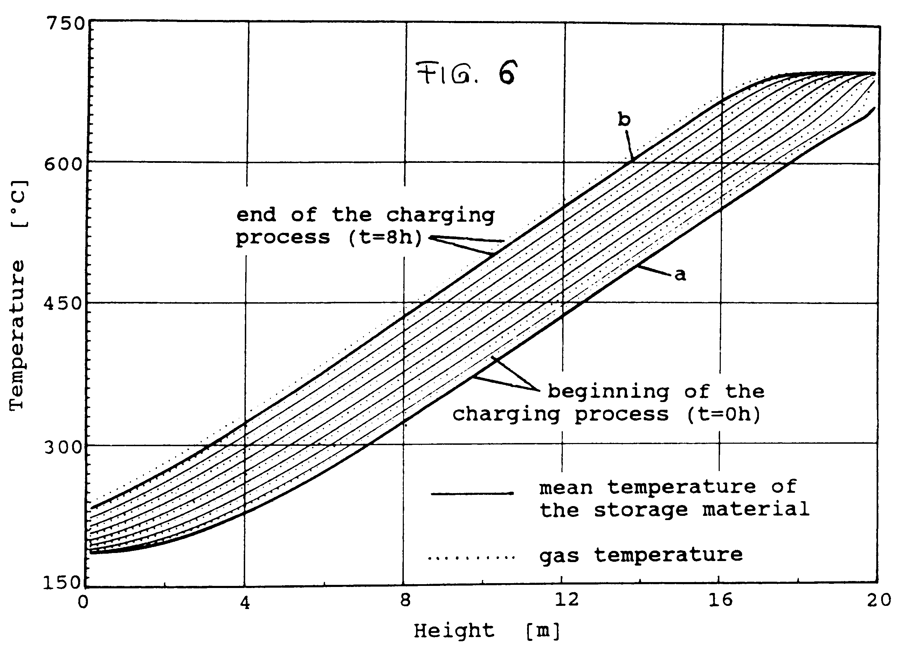

Figur 6 zeigt neun in aufeinanderfolgenden Zeiten gemessene Temperaturverläufe über die Höhe eines Speicherkerns nach dem Stand der Technik. Mit durchgezogener Linie ist die Temperatur des Materials des Speicherkerns angegeben. Mit punktierten Linien ist die Beladestromtemperatur angegeben. Betrachtet man beispielsweise den Temperaturverlauf in der Mitte der Höhe, bei 10 m, dann ist ersichtlich, daß zu Beginn der Beladung sich dort eine Temperatur von etwa 370°C einstellt und dort bei Ende der Beladung eine Temperatur von etwa 500°C vorliegt. Es ergibt sich damit eine Temperaturdifferenz für die speicherbare, sensible Wärme von nur etwa 130°C.

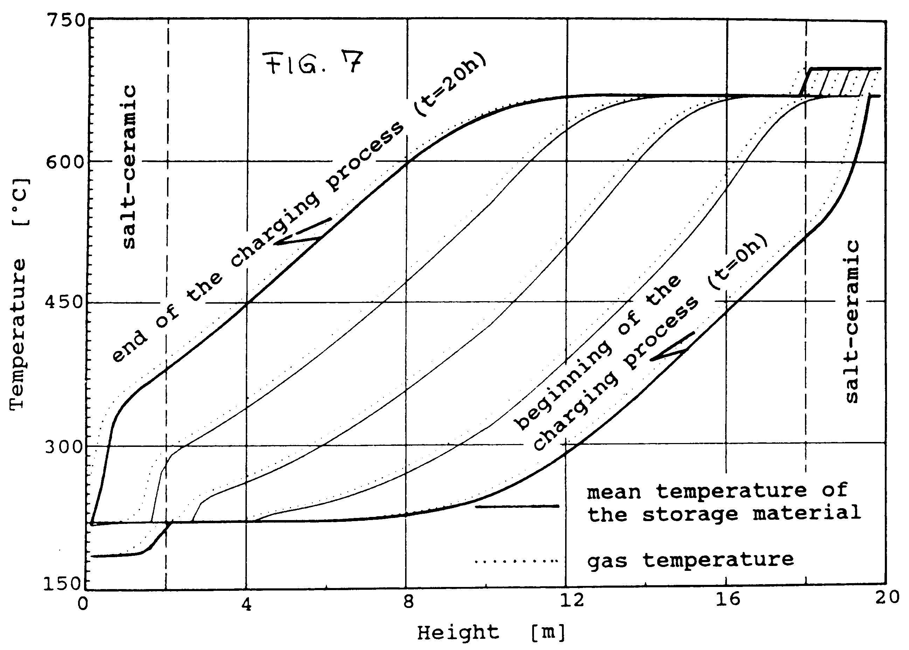

Betrachtet man dagegen das Diagramm nach Figur 7, dann ist ersichtlich, daß durch die Schichten 3, 4 temperaturausgleichcnde Bereiche I, II bestehen. Zwischen diesen Bereichen I, II ist ohne Änderungen der Grenztemperaturen GE, GL im Bereich III, der dem Speicherkern 1 entspricht, der Temperaturverlauf aufgespreizt mit der Folge, daß der Speicherkern 1 wesentlich mehr sensible Wärme aufnehmen und damit auch abgeben kann, als im nach dem Stand der Technik üblichen Fall, bei dem weder die Schicht 3 noch die Schicht 4 vorgesehen sind.

Betrachtet man beispielsweise in Figur 7 in der mittleren Höhe von 10 m die Temperatur, dann ist ersichtlich, daß im Laufe der Ladezeit die Temperaturen zwischen etwa 230°C und 840°C liegen. Die Temperaturdifferenz im Speicherkern 1 liegt also nicht wie beim Stand der Technik nach Figur 6 nur bei etwa 130°C, sondern bei etwa 600°C. Es ist also durch die Schichten 3, 4 bzw. durch die auf ihnen beruhenden Bereiche I, II eine beträchtliche Erhöhung der Wärmeaufnahmekapazität für sensible Wärme des aus üblichen keramischen Material bestehenden Speicherkerns 1 erreicht.

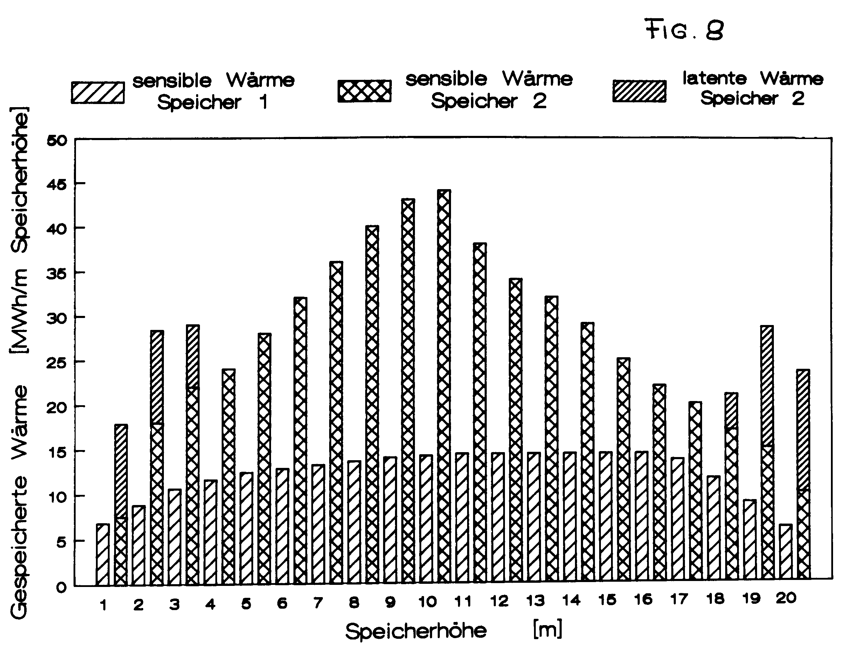

Dies wird insbesondere auch in Figur 8 für den gesamten Speicher noch über der Höhe aufgetragen.

## Patentansprüche

1. Regenerator, beispielsweise bei einem Winderhitzer oder einem Wärmespeicher in einer Solaranlage, mit einem aus keramischen oder metallischen oder natürlichem Material aufgebauten Speicherkern zur Speicherung sensibler Wärme, wobei der Speicherkern zum Laden von der einen, "heißen" Seite her mit einem heißen Ladestrom beaufschlagt wird, bis an der anderen, "kalten" Seite eine maximal zulässige Ladestrom-Austrittstemperatur erreicht ist und der Speicherkern zum Entladen von der anderen, "kalten" Seite her mit einem kalten Entladestrom beaufschlagt wird, bis an der einen, "heißen" Seite eine minimal zulässige Entladestrom-Austrittstemperatur erreicht ist,
dadurch gekennzeichnet,
daß an der heißen Seite und/oder an der kalten Seite des Speicherkerns (1) als Temperaturpuffer eine Schicht (3,4) angeordnet ist, die das Erreichen der maximal zulässigen Ladestrom-Austrittstemperatur (GL) und/oder der minimal zulässigen Entladestrom-Austrittstemperatur (GE) überproportional verzögert, oder die Wärmeaufnahmekapazität überproportional erhöht.

2. Regenerator nach Anspruch 1,
dadurch gekennzeichnet,
daß die Schicht (3, 4) aus einem Material erhöhter Wärmekapazität durch eine höhere Dichte und/oder höhere spezifische Wärmekapazität besteht.

3. Regenerator nach Anspruch 1,
dadurch gekennzeichnet,
daß die Schicht (3, 4) aus einem Latentwärme-Speichermaterial besteht.

4. Regenerator nach Anspruch 1,
dadurch gekennzeichnet,
daß die Schicht (3, 4) aus einem Material besteht, welches eine chemische Reaktion durchläuft.

5. Regenerator nach Anspruch 1,
dadurch gekennzeichnet,
daß die Schicht (3, 4) aus Materialien veränderter geometrischer Kenndaten besteht.

6. Regenerator nach Anspruch 5,
dadurch gekennzeichnet,
daß die Strömungsdurchgangsquerschnitte (6) der Schicht (3, 4) kleiner sind als die des Speicherkerns (1).

7. Regenerator nach Anspruch 3,
dadurch gekennzeichnet, daß im Latentwärme-Speichermaterial die Schmelzenthalpie ausgenutzt ist.

8. Regenerator nach Anspruch 3 und 7,
dadurch gekennzeichnet,
daß die Schicht (3, 4) aus einem Salz/Keramik-Material besteht.

9. Regenerator nach Anspruch 8,
dadurch gekennzeichnet,
daß die Schicht (3, 4) aus Steinen (5) aufgebaut ist, in deren keramische Struktur Salze als Latentwärme-Speichermaterial eingelagert sind.

10. Regenerator nach Anspruch 9,
dadurch gekennzeichnet,
daß die Steine (5) Durchgangslöcher (6) für den Entladestrom und den Ladestrom aufweisen.

11. Regenerator nach einem der vorhergehenden Ansprüche 3 und 7 bis 10,
dadurch gekennzeichnet,
daß die Schicht (3) der heißen Seite eine höhere Phasenumwandlungstemperatur aufweist, als die Schicht (4) der kalten Seite.

12. Regenerator nach Anspruch 11,
dadurch gekennzeichnet,
daß die Phasenumwandlungstemperatur des Latentwärme-Speichermaterials der Schicht (3) der heißen Seite zwischen der Temperatur des Ladestroms und der beim Entladen minimal zulässigen Austrittstemperatur des Entladestroms liegt.

13. Regenerator nach einem der vorhergehenden Ansprüche 11 oder 12,
dadurch gekennzeichnet,
daß die Phasenumwandlungstemperatur des Latentwärme-Speichermaterials der Schicht (4) der kalten Seite zwischen der Entladetemperatur des Entladestroms und der maximal zulässigen Austrittstemperatur des Ladestroms liegt.

14. Regenerator nach einem der vorhergehenden Ansprüche,
dadurch gekennzeichnet,
daß es sich bei den Schichten (3, 4) um eine Schüttung handelt.

15. Regenerator nach einem der vorhergehenden Ansprüche,
dadurch gekennzeichnet,
daß es sich bei dem Speichermaterial um Metalle oder natürlich vorkommende Materialien handelt.

16. Regenerator nach einem der vorhergehenden Ansprüche,
dadurch gekennzeichnet,
daß die Dicke der Schichten (3, 4) zwischen 10% und 35% der Höhe des Speicherkerns (1) liegt.

17. Regenerator nach einem der vorhergehenden Ansprüche,
dadurch gekennzeichnet,
daß die Schichten (3, 4) gleiche Dicke aufweisen.
